Europäisches Patentamt

European Patent Office

Office européen des brevets

(11) Publication number: **0 336 654**
**A2**

# EUROPEAN PATENT APPLICATION

(21) Application number: **89303183.1**

(22) Date of filing: **31.03.89**

(51) Int. Cl.⁴: **H02G 11/00 , H02G 11/02 , F16L 3/00**

(30) Priority: **01.04.88 US 176670**

(43) Date of publication of application:
**11.10.89 Bulletin 89/41**

(84) Designated Contracting States:
**BE DE FR GB IT**

(71) Applicant: **Rowland, David E.**
**Suite 12 497 11th Street**
**Imperial Beach California 92032(US)**

(72) Inventor: **Rowland, David E.**
**Suite 12 497 11th Street**
**Imperial Beach California 92032(US)**

(74) Representative: **Hayward, Denis Edward Peter**
**et al**
**Lloyd Wise, Tregear & Co. Norman House**
**105-109 Strand**
**London WC2R 0AE(GB)**

(54) **Flexible element holder.**

(57) A device for holding a plurality of loops of an elongated flexible element, comprising a body, a flexible elongated means connected to the body to hold a portion of each loop between it and the body, and a second independent flexible element also connected to the body for clamping at least one loop against the body. The flexible elongated means of the invention, and the flexible element for clamping, are independent of each other, are independently adjustable, and can be used either separately or together to hold and secure a cord or other flexible element.

EP 0 336 654 A2

## FLEXIBLE ELEMENT HOLDER

The vast majority of electrical appliances and devices used, both at home and in business, have some type of electrical cord attached to them. The spacing of electrical outlets, as well as the location of use of a given appliance, varies greatly, and could even be outside a given building. These factors have led to cords that vary from a few inches to several feet in length. In most cases, manufacturers have decided to err on the side of making their electrical devices with cords that are longer, rather than shorter, to make possible a great variety of uses.

These long cords have presented several problems to the user of the electrical appliance or device. First, long cords lead to tangling and knotting which can fray the cord, or cause increased localized tension on part of the cord, creating an unsafe, as well as annoying, problem. Similar problems are also encountered with other flexible elements, such as ropes or hoses. A long, loose cord may also present an electrical hazard, particularly when it is used in combination with electrical appliances such as hedge clippers, where a loose cord could be accidentally cut.

Various solutions to these problems have been proposed. One such approach has been to provide the appliance with a self-retracting reel-type gathering device for the cords. This solution, however, is not only expensive, but impractical in many instances, due to the space required for such a mechanism. Several more simple devices have also been proposed. Most utilize only a single element to hold all portions or loops of a cord. These devices have generally been very limited in their use, have allowed too much movement of the cord when in use, and have not relieved tension in the ends of the cord.

An important object of the invention is, therefore, to provide a novel and improved flexible element holder that features two integral independent adjustable means of securing a flexible element.

Another important object of the invention is, therefore, to provide a novel and improved flexible element holder that is inexpensive to manufacture and capable of a wide variety of uses.

Another object of the invention is to provide a device to shorten flexible elements, both when an appliance is in use, and when the appliance is being stored.

Yet another object of the invention is to provide a device that is adjustable, to accommodate different lengths of a flexible element.

Another object of the invention is to provide a device capable of relieving stress on the ends of a flexible element.

These, and other objects, are satisfied by a device for holding loops of an elongated flexible element having a body, a flexible elongated means to hold a portion of each loop between it and the body, and a second independent flexible element for clamping at least one loop against the body.

Figure 1 is a perspective view of the flexible element of this invention, illustrating one manner in which it will hold the cord of an ordinary electric drill.

Figure 2 is a fragmentary perspective view of the present invention.

Figure 3 is a top view of the body of the present invention.

Figure 4 is a bottom view of the body of the present invention.

Figures 5 is a fragmentary side view of the present invention.

Figure 6 is a fragmentary view of the flexible element means, according to the present invention.

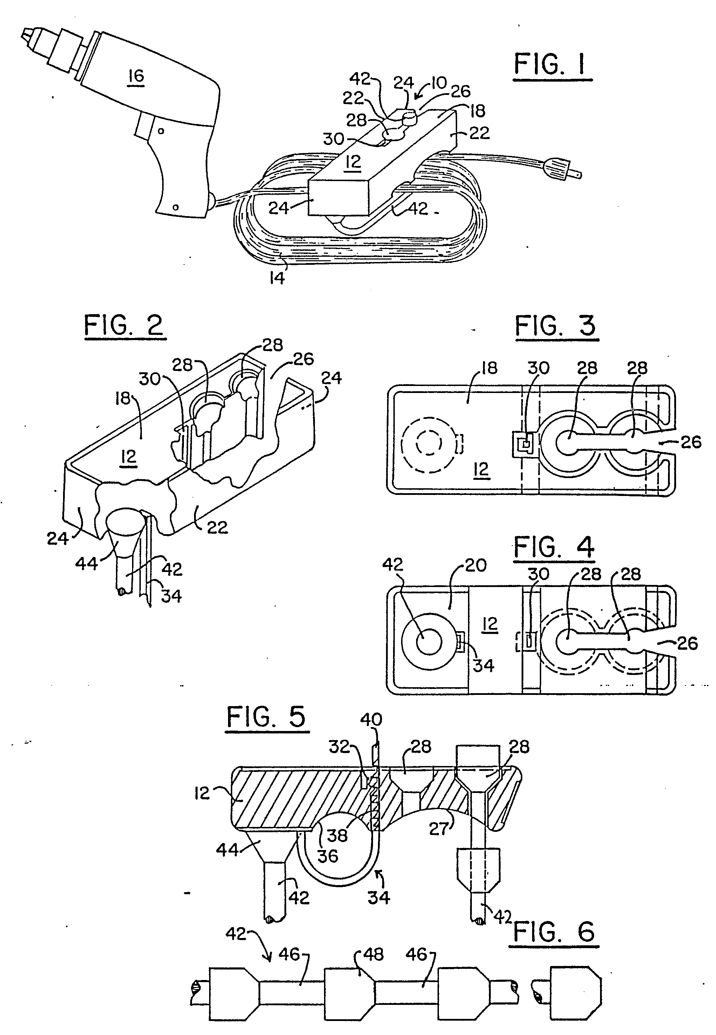

Referring first to Figure 1, flexible element holder 10 is shown as it would appear in use to hold loops of cord 14 of an electrical appliance, such as power drill 16. Holder 10 is also capable of securing other flexible elements, such as ropes or hoses. Holder 10 contains integral body 12, having top, bottom, side and end surfaces 18, 20, 22, 24, respectively. Body 12 is designed to be constructed of a material, such as plastic, polypropylene or a rubber compound to impart the characteristics of flexibility, resilience and resistance to fracture resulting from impact.

Turning now to Figures 1-5, it can be seen that one of the end surfaces 24 of body 12 is provided with an opening 26 that extends transversely from the top to the bottom of body 12. Opening 26 provides access to dual transverse engaging slots 28, that also extend from the top to the bottom of body 12. Holder 10 can be manufactured with any number of slots 28 to allow it to accommodate many different sizes and thicknesses of flexible elements. Engaging slots 28, as shown in Figures 2 and 5, are provided with a wide diameter circular opening at top surface 18 of body 12. The diameter of slots 28 is greatest at top surface 18, and is gradually reduced between top surface 18 and bottom surface 20, until a point approximately midway between top surface 18 and bottom surface 20, wherein the diameter stays constant from the mid-way point to the bottom surface 20. Bottom surface 20 also contains depression 27 in the area of transverse slots 28, to allow an electrical cord 14 to be tightened snugly against body 12, to provide a compact arrangement.

Moving to the central section of integral body 12, transverse aperture 30 extends from top surface 18 to bottom surface 20 of integral body 12. Aperture 30 is notched and features ratchet-like engaging member 32 therein, in close proximity to top surface 18 of body 12.

Moving further along body 12 to the area of end surface 24 opposite opening 26, the dual independent securing means, consisting of flexible clamping means 24 and flexible elongated member 42, can be seen with reference to Figures 1,5, and 6. Flexible clamping means 34 is integral with bottom surface 20 of body 12 at one end, and free at its other end. Clamping means 34 has serrations 38 along one of its surfaces. Since clamping means 34 is independent and fully adjustable, it can be used either separately or in conjunction with the other securing means of holder 10. When it is desired to use clamping means 34, a portion of one or more loops of flexible element are passed through the enclosure formed by bending clamping means 34 toward aperture 30. (See Figure 5.) Free end 40 of clamping means 34 is then inserted into aperture 30 and past ratchet-like engaging member 32, and is pulled upward until the desired size enclosure, that biases the flexible element tightly against depression 36 in bottom surface 20 of body 12, is formed. Once the desired amount of clamping is attained, ratchet-like member 32 engages serration 38 of clamping member 34, to positionally stabilize both member 34 and the cord or element it is clamping. When it is desired to subsequently release flexible element 14 from clamping means 34, pressure is exerted on ratchet-like member 32 to bias it away from serrations 38, and thereby disengage it from clamping means 34. Clamping means 34 can then be freely passed through and removed from bottom of aperture 30, thereby releasing flexible element 14.

The second of the dual securing means of holder 10 is flexible elongated member 42. Member 42 is adjustable and completely independent of clamping means 34, and can be used either separately or in conjunction with clamping means 34. One end 44 of member 42 is integral with bottom surface 20 of body 12. The remainder of member 42 contains a number of beads 48 spaced at intervals along its length with narrowed sections 46 between them, as seen in Figure 6. The operation of member 42 can best be seen with reference to Figures 1,3 and 5. When it is desired to secure flexible element 14 using member 42, member 42 is first stretched to surround loops of flexible element 14 to be held, and pulled so as to tighten loops against depression 27 of body 12. When the desired tensioning is accomplished, one of the narrowed portions 46 of member 42 is passed through opening 26, and then into one of transverse slots 28 of body 12. One of beads 48 of member 42 is then engaged and snaps into the upper part of slot 28, where it is held, thereby keeping loops of flexible member 14 tensioned against depression 27. When it is desired to release member 42, sufficient upward force must be exerted on top of bead 48 to overcome frictional engagement between slot 28 and bead 48. Member 42 can then be passed back through opening 26, thereby releasing loops of flexible element.

Further modifications or alterations may be made in the proportion, details or arrangement of the construction illustrated, without departing from the spirit and scope of the invention as claimed.

## Claims

1. A device for holding an elongated flexible element, comprising:
a body member having an outer surface and two ends,
clamping means supported by said body member, for holding a limited portion of said flexible elongated element against a particular part of said outer surface,
an elongated member, and
means for supporting a portion of said elongated member adjacent one of said two ends and for supporting another portion of said elongated member adjacent the other of said two ends, to position the elongated member adjacent said outer surface, said elongated member being removably supported by said body member at, at least, one of said ends so that the elongated member may pass through loops of said flexible elongated element to support the same.

2. A device as defined in Claim 1, in which said elongated member is flexible.

3. A device as defined in Claim 1 in which said elongated member and said body member comprise means for adjusting the length of the elongated member that is between said ends so that such length may be increased to thereby increase the number of loops that may be held by the device.

4. A device as defined in Claim 1 in which said elongated member has beads spaced along at least a portion of the same and said body member has at least one socket for holding any of the beads so that the area between said elongated member and said outer surface may be varied to thereby vary the capacity of the device to hold loops of said elongated flexible element.

5. A device as defined in Claim 4 in which said body member defines at least two sockets either of which will receive said beads, said two sockets being adjacent one of said two ends but at different distances from the other one of said two ends.

6. A device as defined in Claim 1 wherein the portion of said body member, to which said portion of said flexible elongated element is clamped, is depressed, so that said portion of said elongated flexible element is clamped against a depressed area of said body member.

7. A device as defined in Claim 1 in which the capacity of said clamping means to hold loops of said flexible element is small as compared to the capacity of said flexible member to hold loops of said flexible element.

EP 0 336 654 A2

FIG. 1

FIG. 2

FIG. 3

FIG. 4

FIG. 5

FIG. 6